# EUROPÄISCHE PATENTSCHRIFT

(11) **EP 1 073 575 B1**
(45) Veröffentlichungstag und Bekanntmachung des Hinweises auf die Patenterteilung: **22.01.2003**
(21) Anmeldenummer: 99919236.2
(22) Anmeldetag: 15.04.1999
(51) Int. Cl.: B62D 1/22, B62D 5/09, B62D 6/02

(54) **HYDRAULISCHES LENKSYSTEM FÜR EIN FAHRZEUG, INSBESONDERE FÜR EINE MOBILE ARBEITSMASCHINE**
HYDRAULIC STEERING SYSTEM FOR A VEHICLE, ESPECIALLY FOR A MOBILE WORKING MACHINE
SYSTEME DE DIRECTION HYDRAULIQUE POUR UN VEHICULE, NOTAMMENT POUR UN ENGIN MOBILE

(30) Priorität: 23.04.1998 DE 19818111
(43) Veröffentlichungstag der Anmeldung: 07.02.2001
(73) Patentinhaber: Bosch Rexroth AG, 97816 Lohr am Main (DE)
(72) Erfinder: OBERTRIFTER, Bernd, D-97854 Steinfeld (DE); ROTH, Dieter, D-36381 Schlüchtern (DE)
(86) Internationale Anmeldenummer: EP9902531
(87) Internationale Veröffentlichungsnummer: WO99055573

(56) Entgegenhaltungen:
- EP-A- 0 547 570
- EP-A- 0 636 530
- DE-A- 4 314 616

## Beschreibung

Die Erfindung geht aus von einem hydraulischen Lenksystem, das insbesondere für eine mobile Arbeitsmaschine verwendet wird und das die Merkmale aus dem Oberbegriff des Anspruchs 1 aufweist.

Aus der DE 43 14 616 A1 ist ein hydraulisches Lenksystem bekannt, das ein nach Art eines Lenkrads ausgebildetes, erstes Lenkorgan aufweist, mit dem eine Lenkeinheit mit einem ersten Fluidanschluß, der mit einem für einen Lenkeinschlag nach links von Druck beaufschlagten Druckraum eines Lenkmotors verbunden ist, und mit einem zweiten Fluidanschluß, der mit einem für einen Lenkeinschlag nach rechts mit Druck beaufschlagten Druckraum des Lenkmotors verbunden ist, betätigbar ist. Die Lenkeinheit umfaßt in bekannter Weise eine Dosierpumpe und ein Ventil und geht in eine Neutralstellung zurück, wenn die Drehung des Lenkorgans beendet ist. Über die Lenkeinheit kann außerdem ein Steuerventil hydraulisch betätigt werden, dessen zur Betätigung mit Druck beaufschlagbaren Steuerräume über jeweils ein Wechselventil mit den von der Lenkeinheit zum Lenkmotor führenden Arbeitsleitungen verbunden werden können. Der Lenkmotor besteht im übrigen bei dem Lenksystem nach der DE 43 14 616 A1 aus zwei Hydrozylindern.

Bei dem Lenksystem nach der DE 43 14 616 A1 kann das Steuerventil noch über ein zweites, nach Art eines Joystick ausgebildetes Lenkorgan betätigt werden Dieses enthält zwei Druckminderventile, wobei der Ausgang des einen Druckminderventils über das eine Wechselventil mit dem einen Steuerraum und der Ausgang des anderen Druckminderventils uber das andere Wechselventil mit dem anderen Steuerraum des Steuerventils verbindbar ist. Eine Verbindung wird jeweils dann hergestellt, wenn der Steuerdruck am Ausgang eines Druckminderventils höher ist als der Druck in der mit demselben Wechselventil verbundenen Arbeitsleitung zwischen der Lenkeinheit und dem Lenkmotor. Die beiden Arbeitsanschlüsse des Steuerventils sind mit zwei anderen Druckräumen des Lenkmotors verbunden.

Die beiden Druckminderventile des zweiten Lenkorgans werden aus einer Speiseleitung mit Steueröl versorgt, in der ein weitgehend konstanter Versorgungsdruck herrscht. Die Speiseleitung führt über ein 2/2-Wege-Schaltventil, das von den Drücken an den beiden Fluidanschlüssen der Lenkeinheit gesteuert wird und die Speiseleitung unterbricht, wenn in einem der beiden Fluidanschlüsse ein Druck ansteht. Auf diese Weise soll erreicht werden, daß eine Lenkung mit dem ersten Lenkorgan Priorität gegenüber einer Lenkung mit dem zweiten Lenkorgan genießt.

Ein hydraulisches Lenksystem gemäß dem Oberbegriff des Anspruchs 1 ist aus der DE 40 31 951 A1 bekannt. Bei diesem hydraulischen Lenksystem ist das Steuerventil nur dem zweiten Lenkorgan zugeordnet und nicht über das erste Lenkorgan betätigbar. Der Lenkmotor ist ein Gleichgangzylinder mit zwei Druckräumen, von denen jeder entweder mit einem Arbeitsanschluß der Lenkeinheit oder mit einem Arbeitsanschluß des Steuerventils verbunden ist. Um eine Priorität einer Lenkbetätigung über das erste Lenkorgan gegenüber einer Lenkbetätigung mit dem zweiten Lenkorgan, mit dem das Steuerventil angesteuert wird, zu gewährleisten, sind den beiden Druckräumen des Lenkmotors Ventile vorgeschaltet, die vom Druck an einem Arbeitsanschluß des Steuerventils in eine solche Stellung gebracht werden können, daß der Arbeitsanschluß mit dem entsprechenden Druckraum des Lenkmotors verbunden ist. Eine Steuerleitung, für die das Steueröl an dem jeweils mit Druck beaufschlagten Arbeitsanschluß des Steuerventils entnommen wird, kann über ein weiteres Ventil, das vom Druck an einem Lastmeldeanschluß der Lenkeinheit geschaltet wird, zu einem Tank entlastet werden. Sobald also am Lastmeldeanschluß der Lenkeinheit ein Druck ansteht, wird die Steuerleitung entlastet und die Schaltventile an den Druckräumen des Lenkmotors kommen in eine Stellung, in der die Verbindung zwischen den Arbeitsanschlüssen des Steuerventils und den Druckräumen abgesperrt und eine Verbindung zwischen den Arbeitsanschlüssen der Lenkeinheit und den Druckräumen hergestellt ist.

Ziel der Erfindung ist es, bei einem hydraulischen Lenksystem mit den Merkmalen aus dem Oberbegriff des Anspruchs 1 die Priorität einer Lenkbetätigung mit dem ersten Lenkorgan gegenüber einer Lenkbetätigung mit dem zweiten Lenkorgan auf einfache Weise zu realisieren.

Dieses Ziel wird gemäß der Erfindung dadurch erreicht, daß das Steuerventil nur dann ansteuerbar ist, wenn sich die Lenkeinheit in der Neutralstellung befindet. Es ist also dann das Steuerventil nicht aus einer neutralen Mittelstellung herauszubringen, so daß sich auch eine aufwendige Absperrung seiner Arbeitsanschlüsse gegen den Lenkmotor erübrigt. Es findet lediglich ein Eingriff im Vorsteuerkreis des Steuerventils statt, in dem die Drücke niedrig und die zu steuernden Ölmengen gering sind.

Vorteilhafte Ausgestaltungen eines erfindungsgemäßen hydraulischen Lenksystems finden sich in den Unteransprüchen. Das Vorsteuersignal ist üblicherweise über mit dem zweiten Lenkorgan verstellbare Vorsteuermittel aus einem Versorgungssignal generierbar. Grundsätzlich ist es denkbar, nach den Vorsteuermitteln in die Steuerleitungen einzugreifen, um eine Betätigung des Steuerventils zu verhindern. Da üblicherweise zwei solche Steuerleitungen vorhanden sind, müßte in beide eingegriffen werden. Einfacher erscheint es, gemäß Anspruch 5 das Versorgungssignal, das den Vorsteuermitteln zugeführt wird, abzuschalten.

Überwiegend werden vorgesteuerte Wegeventile heutzutage hydraulisch oder elektrohydraulisch betätigt. In beiden Fällen besitzt das Steuerventil zwei Steuerkammern, die mit Steuerdruck beaufschlagt werden können, wobei der Wegeschieber des Steuerventils dann gegen eine Zentrierfederanordnung aus einer Mittelstellung verschoben wird. Ist das Steuerventil proportional verstellbar, so können die Steuerkammern mit unterschiedlich hohen Steuerdrücken beaufschlagt werden. Gemäß Anspruch 5 ist nun ein Abschaltventil vorhanden, das in einer Schaltstellung, die es im Prioritätsfall einnimmt, eine Verbindung der Vorsteuerventile mit einer Steuerdruckversorgungsleitung unterbricht. Insbesondere wird gemäß Anspruch 6 durch das Abschaltventil in der einen Schaltstellung sein mit den Vorsteuerventilen verbundener Ausgang zu einem Tank hin entlastet, so daß auch die Steuerkammern im Steuerventil von Druck entlastet sind und der Wegeschieber des Steuerventils in seine Mittelstellung zurückkehrt. Jeder weiterer Lenkeinschlag aufgrund einer Fluidversorgung des Lenkmotors über das Steuerventil unterbleibt.

Sogenannte Load-sensing-Lenkeinheiten besitzen einen Druckmeldeanschluß, an dem bei aus der Neutralstellung verstellter Lenkeinheit ein Drucksignal, insbesondere der am ersten oder zweiten Fluidanschluß anstehende Lastdruck, abgreifbar ist. Vorteilhafterweise ist nun gemäß Anspruch 7 in Abhängigkeit von diesem Drucksignal mit dem zweiten Lenkorgan ein Vorsteuersignal generierbar oder nicht. Insbesondere ist gemäß Anspruch 8 das Schaltventil, das in einer Schaltstellung eine Verbindung der Vorsteuerventile mit der Steuerdruckversorgungsleitung unterbricht, hydraulisch direkt von dem am Druckmeldeanschluß der Lenkeinheit anstehenden Druck umschaltbar.

Die Vorsteuerventile konnen vonhand oder auch elektrisch insbesondere durch einen Elektromagneten betätigbar sein. Bei einer elektrischen Betätigung werden nun gemäß Anspruch 9 die Vorsteuermittel vorteilhafterweise elektrisch abgeschaltet. D.h., daß der elektrische Aktor eines Vorsteuerventils trotz betätigtem zweiten Lenkorgan kein elektrisches Steuersignal erhält, wenn sich die Lenkeinheit nicht in ihrer Neutralstellung befindet. Dies erscheint vor allem dann eine einfache Lösung, wenn das hydraulische System einer mobilen Arbeitsmaschine ohnehin viele elektronische Komponenten enthält, die auch in das Lenksystem eingreifen.

Es erübrigt sich in einem solchen Fall, den Versorgungsdruck für die Vorsteuerventile wegzuschalten. Sicherheitsgründe können jedoch dafür sprechen, zusätzlich auch den Versorgungsdruck wegzuschalten. Vorteilhafterweise wird für die elektrische Abschaltung ein Druckschalter verwendet, der durch den am Druckmeldeanschluß der Lenkeinheit anstehenden Druck betätigbar ist.

Gemäß Anspruch 11 ist vorgesehen, daß eine Bewegung des ersten Lenkorgans durch einen elektrischen Signalgeber erfaßt wird und daß die Vorsteuermittel über den elektrischen Signalgeber abschaltbar sind. Eine solche Ausbildung ist universell einsetzbar auch bei solchen Lenkeinheiten, die keinen Druckmeldeanschluß aufweisen. Außerdem ist diese Lösung besonders einfach wiederum in Systemen, in denen viel Elektronik eingesetzt wird.

Insbesondere für mobile Arbeitsmaschinen, deren hydraulisches System auch elektronische Steuerungen z.B. in Form eines Microcomputers oder Microcontrollers umfaßt, ist es leicht möglich, die Lenkgeschwindigkeit, die bei einer proportionalen Ansteuerung des Steuerventils vom Betätigungsweg des zweiten Lenkorgans abhängig ist, auch von der Geschwindigkeit des Fahrzeugs abhängig zu machen. Z.B. kann durch Eingriff des Microcontrollers bei gegebener Stellung des zweiten Lenkorgans der Verstellweg des Steuerventils mit zunehmender Geschwindigkeit immer kleiner gemacht werden Eine andere und einfachere Möglichkeit, die Fahrgeschwindigkeit bei der Lenkgeschwindigkeit zu berücksichtigen, besteht gemäß Anspruch 14 darin, daß in Abhängigkeit von der Fahrzeuggeschwindigkeit lediglich die maximal mögliche Größe des Vorsteuersignals veränderbar ist. Dies bedeutet, daß bei einer Betätigung des zweiten Lenkorgans aus seiner Neutralstellung heraus die Fahrzeuggeschwindigkeit zunächst keinen Einfluß auf die Lenkgeschwindigkeit hat. Ab einem bestimmten Betätigungsweg läßt sich jedoch das Vorsteuersignal für das Steuerventil nicht mehr erhöhen, auch wenn das zweite Lenkorgan weiterbewegt wird. Den Punkt, ab dem das Steuerventil nicht mehr weiter verstellbar ist, hängt nun von der Fahrzeuggeschwindigkeit ab. Er liegt bei großer Fahrzeuggeschwindigkeit näher an der Neutralstellung des zweiten Lenkorgans als bei niedriger Fahrzeuggeschwindigkeit. Starke Lenkkorrekturen mit dem zweiten Lenkorgan sind somit um so mehr ausgeschlossen, je höher die Fahrzeuggeschwindigkeit ist. Dabei kann die Steuerung so gestaltet sein, daß erst ab einer bestimmten Mindestgeschwindigkeit die Reduzierung der maximalen Lenkgeschwindigkeit erfolgt. Die Fahrzeuggeschwindigkeit läßt sich durch einen Tacho erfassen. Mobile Arbeitsmaschinen sind jedoch meist auch mit einer Fahrhydraulik ausgestattet, wobei ein Steuerdruck für die Fahrhydraulik ein Maß für die Fahrzeuggeschwindigkeit ist. Dieser Steuerdruck kann nun dazu verwendet werden, um ein Ventil anzusteuern, mit dessen Hilfe ein maximal möglicher Vorsteuerdruck veränderbar ist.

Eine Lenkmöglichkeit mit einem Joystick kann auch bei sogenannten Baggerladern verwendet werden. Die Vorsteuergeräte sind heutzutage meist in die Lehnen des Fahrzeugsitzes integriert. Gemäß Anspruch 18 wird nun durch eine Drehung des Fahrzeugsitzes um 180 Grad die Verstellung des Steuerventils in Abhängigkeit von der Betätigungsrichtung des zweiten Lenkorgans umgekehrt, so daß in beide Fahrrichtungen des Baggerladers die Lenkung sinngemäß erfolgt.

Mehrere Ausführungsbeispiele eines erfindungsgemäßen hydraulischen Lenksystems sind als Schaltbilder dargestellt. Anhand dieser Ausführungsbeispiele wird die Erfindung nun näher erläutert.

Es zeigen
- Figur 1: das Schaltbild der ersten Ausführung, bei der das Steuerventil über ein hydraulisches Vorsteuergerät betätigbar ist und der Versorgungssteuerdruck für das Vorsteuergerät wegschaltbar und in Abhängigkeit von der Fahrzeuggeschwindigkeit verringerbar ist,
- Figur 2: die zweite Ausführung, die einen Microcontroller enthält, von dem ein elektrisches Vorsteuergerät für das Steuerventil mit Spannung versorgt wird und dem ein Signal eines eine Bewegung des ersten Lenkorgans detektierenden Sensors zuführbar ist, und
- Figur 3: die dritte Ausführung, die wie diejenige nach Figur 2 einen Microcontroller enthält, wobei diesem jedoch das Signal eines einen Lastdruck detektierenden Drucksensors zugeführt wird.

Alle gezeigten Ausführungen enthalten als Hauptkomponenten eine load-sensinggeregelte Verstellpumpe 10, eine über ein als erstes Lenkorgan zu betrachtendes Lenkrad 11 betätigbare Load-sensing-Lenkeinheit 12, ein hydraulisch vorgesteuertes, proportional verstellbares Load-sensing-Steuerventil 13 mit einem nicht näher dargestellten axial verstellbaren Steuerschieber und zwei Lenkmotore 14 in Form von Differentialhydrozylindern. Beide Hydrozylinder 14 könnte man auch gemeinsam als ein Lenkmotor betrachten. Die Verstellpumpe 10 wird von einem Verbrennungsmotor einer mobilen Arbeitsmaschine angetrieben und saugt Druckmittel aus einem Tank 15 an und gibt dieses in eine Druckleitung 16 ab.

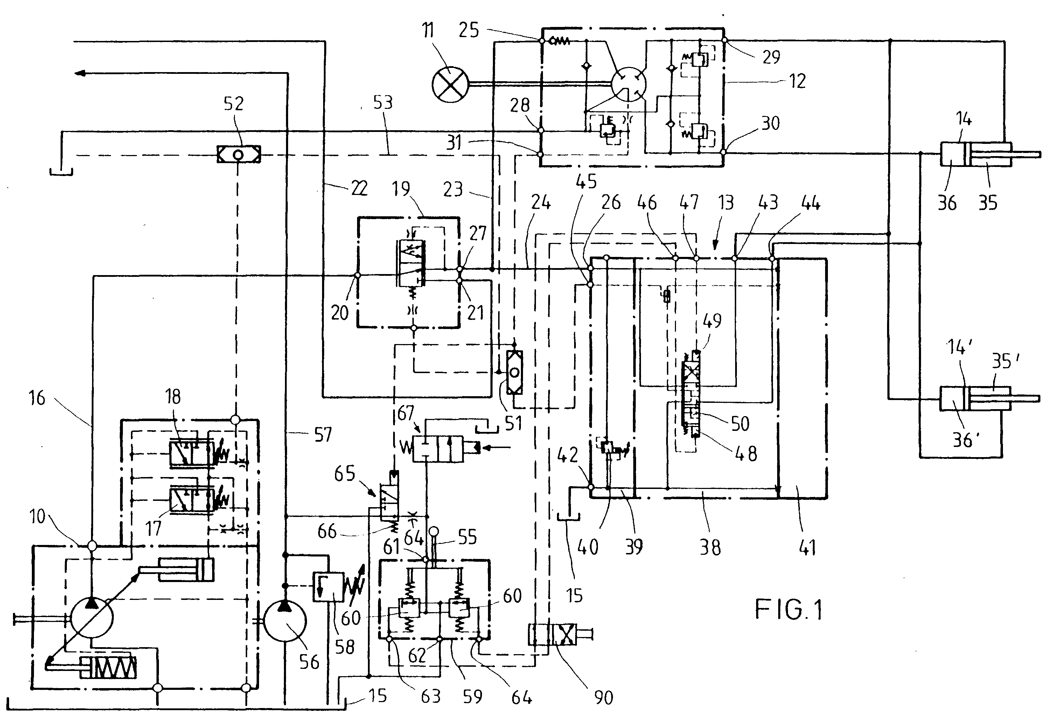

Bei der Ausführung nach Figur 1, auf die sich die folgende Beschreibung zunächst bezieht, sind auf die Verstellpumpe 10 in bekannter Weise ein erstes Regelventil 17, das den Druck in der Druckleitung 16 auf einen Maximalwert begrenzt, und ein zweites Regelventil 18 aufgebaut, das den sogenannten Load-sensing-Regler darstellt und dessen nicht näher bezeichneter Regelkolben im Sinne einer Verstellung der Verstellpumpe in Richtung größerer Fördermenge vom höchsten Lastdruck der von der Verstellpumpe 10 mit Druckmittel versorgten hydraulischen Verbraucher und von einer Druckfeder und in Richtung kleinerer Fördermenge vom Druck in der Druckleitung 16 beaufschlagt wird. Die Druckfeder ist so vorgespannt, daß bei einer Druckdifferenz von 10 bis 20 bar zwischen dem Druck in der Druckleitung 16 und dem höchsten Lastdruck ein Kräftegleichgewicht am Regelkolben des Regelventils 18 herrscht.

Die Druckleitung 16 führt zum Eingang 20 eines Prioritätsventils 19, an dessen Sekundärausgang 21 eine zu einer zur Arbeitshydraulik der mobilen Arbeitsmaschine gehörenden Ventilgruppe führende Versorgungsleitung 22 angeschlossen ist. Mit dem Primärausgang 27 des Prioritätsventils 19 sind über Zweigleitungen 23 und 24 der Pumpenanschluß 25 der Lenkeinheit 12 und der Pumpenanschluß 26 des Steuerventils 13 angeschlossen. Der nicht näher bezeichnete Regelkolben des Prioritätsventils 19 wird im Sinne einer Verbindung des Eingangs 20 mit dem Sekundärausgang 21 vom Druck in den Zweigleitungen 23 und 24 und im Sinne einer Verbindung des Eingangs 20 mit dem Primärausgang 27 vom jeweils höchsten der an den Druckmeldeausgangen 31 bzw. 45 der Lenkeinheit 12 und des Steuerventils 13 anstehenden Lastdruck der Lenkmotore 14 und von einer Druckfeder beaufschlagt. Die Druckfeder ist so eingestellt, daß die Differenz zwischen dem Druck in den Zweigleitungen 23 und 24 und dem von der Lenkeinheit 12 bzw. vom Steuerventil 13 gemeldeten Lastdruck etwas geringer als die Differenz zwischen dem Druck in der Druckleitung 16 und dem höchsten Lastdruck ist.

Die Lenkeinheit 12 enthält in bekannter Weise und deshalb nur sehr schematisch dargestellt eine Handpumpe und ein Ventil, das nach dem Ende einer Betatigung des Lenkrads jeweils in eine Neutralstellung gelangt, in der der Pumpenanschluß 25, ein Tankanschluß 28 und zwei Motoranschlüsse 29 und 30 der Lenkeinheit 12 gegeneinander abgesperrt sind. Der Motoranschluß 29 der Lenkeinheit 12 ist mit dem kolbenstangenseitigen, ringförmigen Druckraum 35 des einen Hydrozylinders 14 und mit dem kolbenstangenabseitigen Druckraum 36' des Hydrozylinders 14' fluidisch verbunden. Die Druckräume 35 und 36' werden mit Druck beaufschlagt, wenn ein Lenkeinschlag in Richtung nach links erfolgen soll. Sie sind sozusagen die linken Druckräume der Lenkmotore 14 und 14'. Der Motoranschluß 30 der Lenkeinheit 12 ist mit dem kolbenstangenseitigen, ringförmigen Druckraum 35' des Hydrozylinders 14' und mit dem kolbenstangenabseitigen Druckraum 36 des Hydrozylinders 14 fluidisch verbunden. Die beiden Druckräume 36 und 35' werden mit Druck beaufschlagt, wenn nach rechts gelenkt werden soll. Sie sind sozusagen die rechten Druckräume der Hydromotoren 14 und 14'.

Das Steuerventil 13 besitzt als Gehäuse eine Ventilscheibe 38, die sich zwischen einer Eingangsscheibe 39 mit einem Druckbegrenzungsventil 40 und einer Endplatte 41 befindet, mit der verschiedene durch die Ventilscheibe 38 hindurchgehende Fluidkanäle verschlossen werden. Ein durch die Eingangsscheibe 39 hindurchgehender Kanal, der am Pumpenanschluß 26 des Steuerventils 13 beginnt und an den das Druckbegrenzungsventil 40 mit seinem Eingang angeschlossen ist, setzt sich in der Ventilscheibe 38 fort. Ebenso geht durch die Eingangsscheibe 39 ein auch in der Ventilscheibe 38 vorhandener Rückführkanal hindurch, der außen an der Eingangsscheibe 39 als Tankanschluß 42 erscheint, der mit Tank 15 verbunden ist. Zwei Motoranschlüsse 43 und 44 des Steuerventils 13, von denen der Motoranschluß 43 gemeinsam mit dem Motoranschluß 29 der Lenkeinheit 12 mit den linken Druckräumen 35 und 36' und der Motoranschluß 44 gemeinsam mit dem Motoranschluß 30 der Lenkeinheit 12 mit den rechten Druckräumen 36 und 35' der Lenkmotore 14 und 14' verbunden ist, befinden sich an der Ventilscheibe 38.

Außer den bisher genannten Arbeitsanschlüssen 26, 42, 43 und 44 besitzt das Steuerventil 13 noch mehrere Steueranschlüsse, nämlich den schon erwähnten Lastmeldeanschluß 45 sowie zwei Vorsteueranschlüsse 46 und 47, die zu Steuerkammern 48 und 49 vor den beiden Stirnseiten eines federzentrierten und aus einer Mittelstellung proportional verstellbaren Wegeschiebers 50 des Steuerventils 13 führen. In der Mittelstellung sperrt der Wegeschieber 50 die Anschlüsse 26, 42, 43 und 44 gegeneinander ab und verbindet den Lastmeldeanschluß 45 mit dem Tankanschluß 42. Durch eine Verschiebung aus der Mittelstellung wird je nach Verschieberichtung der eine der beiden Motoranschlüsse 43 und 44 über eine Meßblende mit dem Pumpenanschluß 26 und der andere Motoranschluß mit dem Tankanschluß 42 verbunden. Der Druck stromab der Meßblende wird abgegriffen und erscheint am Lastmeldeanschluß 45.

Ein Wechselventil 51 verbindet entweder den Lastmeldeanschluß 31 der Lenkeinheit 12 oder den Lastmeldeanschluß 45 des Steuerventils 13 mit einem Abschnitt 53 einer Lastmeldeleitung, der zu einem weiteren Wechselventil 52 führt, das den jeweils höheren Lastdruck der Lenkhydraulik oder der Arbeitshydraulik an das Regelventil 18 der Verstellpumpe 10 meldet. An den Ausgang des Wechselventils 51 ist auch die eine Seite des Prioritätsventils 19 angeschlossen.

Wie das Steuerventil 13 so sind auch die einzelnen Ventile der Arbeitshydraulik rein hydraulisch betätigt. Das dazu notwendige Steueröl wird von einer Steuerölpumpe 56 in eine Steuerleitung 57 gefordert, in der durch ein Druckbegrenzungsventil 58 ein Druck von z.B. 30 bar aufrechterhalten wird, der dem maximalen Vorsteuerdruck entspricht. Über die Steuerleitung 57 wird ein nicht näher dargestelltes hydraulisches Vorsteuergerat der Arbeitshydraulik sowie ein über einen Handhebel (Joystick 55) betätigbares hydraulisches Vorsteuergerät 59 der Lenkhydraulik mit Steueröl versorgt Das Vorsteuergerät 59 enthalt zwei über den Handhebel verstellbare Druckminderventile 60 mit einem gemeinsamen Druckanschluß 61, einem gemeinsamen Tankanschluß 62 sowie jeweils mit einem Steueranschluß 63 bzw. 64, die jeweils mit einer der Steuerkammern 48 und 49 des Steuerventils 13 verbunden sind. Welcher Steueranschluß 63, 64 mit welcher Steuerkammer 48, 49 verbunden ist, hängt von der Stellung eines Umschaltventils 90 ab, das während einer Drehung des Fahrzeugsitzes um 180 Grad geschaltet wird und für eine Lenkung im Sinne der Joystick-Auslenkung sorgt. Der Druckanschluß 61 des Vorsteuergerätes 59 liegt über eine Düse 64 an einem Anschluß eines Abschaltventils 65, das unter der Wirkung einer Feder 66 eine Ruhelage einnimmt, in der der besagte Anschluß mit der Steuerleitung 57 verbunden ist, und das hydraulisch durch den Druck am Lastmeldeanschluß 31 der Lenkeinheit in eine Schaltstellung gebracht werden kann, in der die Steuerleitung 57 zum Druckanschluß 61 des Vorsteuergerätes 59 abgesperrt und der Druckanschluß 61 zum Tank entlastet ist. Das Schaltventil 65 wird schon bei einem sehr kleinen Lastdruck umgeschaltet. An der Verbindung zwischen der Düse 64 und dem Druckanschluß 61 liegt ein proportional von einem Steuerdruck der Fahrhydraulik der mobilen Arbeitsmaschine verstellbares Drosselventil 67, das eine Drossel zwischen dem Druckanschluß 61 und dem Tank um so weiter aufmacht, je höher der Steuerdruck in der Fahrhydraulik ist. Dadurch sinkt der am Druckanschluß 61 anstehende maximale Steuerdruck unter den Wert in der Steuerleitung 57.

Bei einer Betätigung der Lenkeinheit 12 oder des Steuerventils 13 wird ein Lastdruck an die Verstellpumpe 10 gemeldet, die so weit ausschwenkt, daß in der Druckleitung 16 ein um ein bestimmtes Δp höherer Pumpendruck ansteht Das Prioritätsventil 19 läßt jeweils soviel Flussigkeitsmenge von der Druckleitung 16 in die Zweigleitungen 23 und 24 durch, daß in diesen ein um ein bestimmtes Δp höherer Druck als der Lastdruck ansteht Durch eine Bewegung des Lenkorgans 11 wird je nach Bewegungsrichtung der Motoranschluß 29 oder der Motoranschluß 30 mit dem Pumpenanschluß 25 verbunden und dadurch in die entsprechenden Druckräume der Hydrozylinder 14 und 14' Druckmittel geleitet. Aus den anderen Druckräumen wird Druckmittel verdrängt und über die Lenkeinheit 12 und deren Tankanschluß 28 zum Tank zurückgeführt. Wird das Lenkrad 11 in einer bestimmten Position gehalten, so werden die Anschlüsse 25, 28, 29 und 30 durch die Lenkeinheit 12 wieder voneinander getrennt.

Zur Lenkung mithilfe des Steuerventils 13 wird das Vorsteuergerät 59 betätigt und dadurch in einer der beiden Steuerkammern 48 oder 49 ein Steuerdruck aufgebaut, durch den der Wegeschieber 50 aus seiner Mittelstellung gebracht wird. Je nach Lenkrichtung wird der Motoranschluß 43 oder 44 mit dem Pumpenanschluß 26 und der andere Motoranschluß mit dem Tankanschluß 42 verbunden, so daß entsprechende Druckräume der Hydrozylinder 14 und 14' mit Druck beaufschlagt und die anderen Druckräume von Druck entlastet werden. Wird das Vorsteuergerät 59 während einer Drehbewegung des Lenkrads 11 betätigt, so kann kein Vorsteuerdruck in einer der Steuerkammern 48 oder 49 des Steuerventils 13 aufgebaut werden. Denn während einer Drehung des Lenkrads 11 steht am Lastmeldeanschluß 31 der Lenkeinheit 12 der zur Bewegung der Kolben der Lenkzylinder 14 und 14' notwendige Lastdruck an, der das Schaltventil 65 in eine Stellung bringt, in der der Druckanschluß 61 des Vorsteuergeräts 59 zum Tank entlastet ist. Somit ist über das Vorsteuergerät 59 während der Zeit, in der das Lenkrad 11 bewegt wird, keine Lenkung des Fahrzeugs möglich. Die Lenkung über das Lenkrad 11 hat Vorrang.

Die Lenkung über den Joystick 55 des Vorsteuergeräts 59 hat ein anderes Verhalten als die Lenkung über das Lenkrad 11. Bei einer Lenkung über letzteres ändert sich der Lenkeinschlag solange, solange das Lenkrad bewegt wird. Nach Beendigung der Drehung des Lenkrads bleibt der Lenkeinschlag konstant. Die Drehrichtung des Lenkrads bestimmt die Richtung des Lenkeinschlags von der augenblicklichen Position der gelenkten Räder aus oder anders ausgedrückt: Die Richtung der Bewegung der Kolben der Lenkzylinder 14 und 14' wird durch die Drehrichtung des Lenkrads 11 bestimmt. Bei einer Lenkung mithilfe des Joysticks 55 dagegen verändert sich der Lenkeinschlag solange im selben Richtungssinne, solange der Joystick des Vorsteuergeräts 55 sich auf derselben Seite einer Neutralstellung befindet. Auch wenn der Joystick dort in Ruhe ist, nimmt der Lenkeinschlag nach rechts oder links weiter zu. Die Größe der Auslenkung des Joysticks aus seiner Neutralstellung beeinflußt nur die Geschwindigkeit des Lenkeinschlags. Je weiter der Joystick ausgelenkt ist, desto schneller wird gelenkt. Da somit durch maximale Auslenkung des Joysticks nach einem im Vergleich zur Drehung eines Lenkrads kleinen Betätigungsweg sehr große Lenkgeschwindigkeiten erreicht werden, wird, um Gefahrensituationen nicht aufkommen zu lassen, die über den Joystick maximal mögliche Lenkgeschwindigkeit in Abhängigkeit von der Fahrzeuggeschwindigkeit begrenzt. Dazu dient das Drosselventil 67. Dieses begrenzt den maximalen Vorsteuerdruck auf um so kleinere Werte je größer die Fahrzeuggeschwindigkeit ist. Nur dieser kleinere Wert eines Vorsteuerdrucks kann bei maximaler Auslenkung des Joysticks 55 des Vorsteuergeräts 59 in eine Steuerkammer des Steuerventils 13 gegeben werden, so daß auch die Auslenkung von dessen Wegeschieber 50 und damit der Öffnungsquerschnitt der Meßblende begrenzt ist. Das Verhalten ist so, daß bei kleinen Auslenkungen des Joysticks die Lenkgeschwindigkeit unabhängig von der Fahrzeuggeschwindigkeit ist und ab einem bestimmten, von der Fahrzeuggeschwindigkeit abhängigen Maß der Auslenkung des Joysticks die Lenkgeschwindigkeit nicht mehr erhöht werden kann.

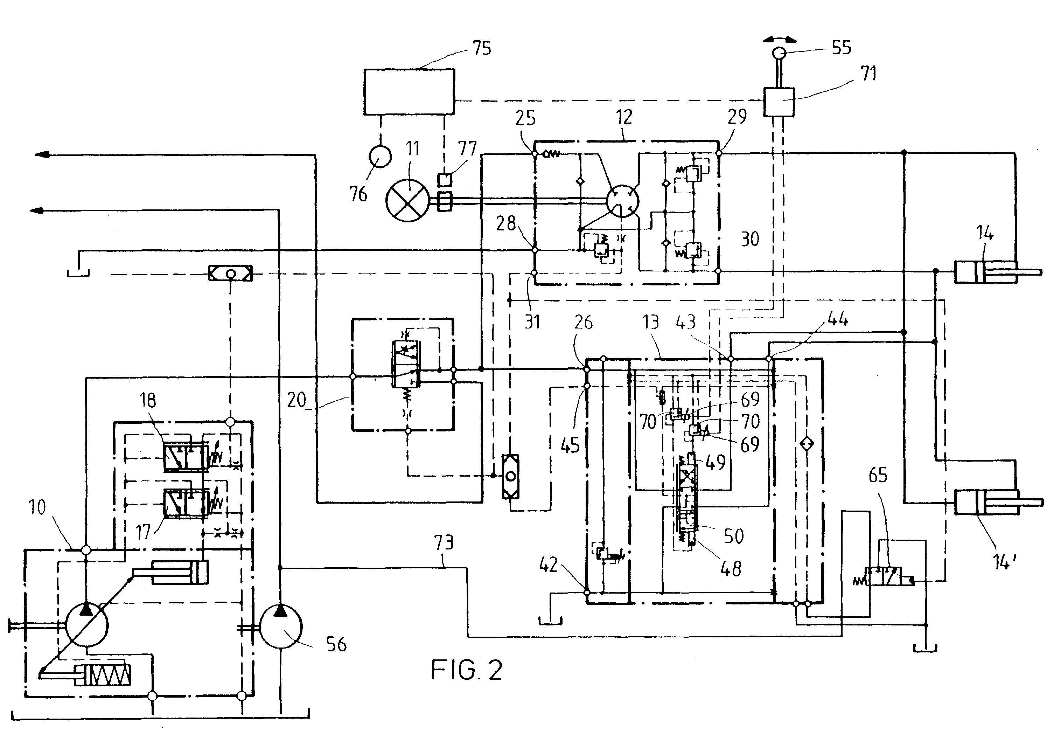

Die Ausführung nach Figur 2 entspricht hinsichtlich der Verstellpumpe 10 mit den Regelventilen 17 und 18, hinsichtlich des Prioritätsventils 20, hinsichtlich der Lenkeinheit 12 und des Lenkrads 11 sowie hinsichtlich des Steuerventils 13 und hinsichtlich der Lenkzylinder 14 und 14 weitgehend der Ausführung nach Figur 1. Im folgenden wird deshalb nur auf die Unterschiede hingewiesen. Das Steuerventil 13 ist nun nicht rein hydraulish, sondern elektrohydraulisch betätigbar.

D.h., daß jeder Steuerkammer 48 und 49 ein durch einen Elektromagneten verstellbares Druckminderventil 70 vorgeschaltet ist, wobei die Proportionalmagnete 69 über ein elektrisches Vorsteuergerät 71 mit einem Joystick 55 angesteuert werden. Mit Steueröl versorgt werden die Druckminderventile 70 wiederum von einer Steuerölpumpe 56, von der eine Steuerleitung 73 zu einem Abschaltventil 65 führt, das in einer Ruhestellung die Druckeingänge der Druckminderventile 70 mit der Steuerleitung 73 verbindet und in einer geschalteten Stellung zum Tank entlastet. Geschaltet wird das Abschaltventil 65 durch einen am Lastmeldeanschluß 31 der Lenkeinheit 12 anstehenden Lastdruck.

Das Vorsteuergerät 71 ist mit einem Microcontroller 75 verbunden, der das Vorsteuergerät 71 mit einer maximalen Steuerspannung versorgt, aus der mit dem Vorsteuergerät 71 eine mit der Auslenkung des Joysticks 55 wachsende Steuerspannung für einen der beiden Elektromagnete 69 generiert wird. Der Microcontroller 75 erhält Signale von einem Tachogenerator 76, der die Geschwindigkeit des Fahrzeugs erfaßt, und von einem Sensor 77, der direkt erfaßt. ob das Lenkrad 11 gedreht wird oder nicht oder der ein Positionssensor ist, aus dessen Signal der Microcontroller durch Ableitung nach der Zeit ein Lenkrad 11 in Bewegung oder ein Lenkrad 11 in Ruhe feststellt.

Sobald der Microcontroller 75 eine Bewegung des Lenkrads 11 feststellt. schaltet er die Spannungsversorgung für das Vorsteuergerät 71 ab, so daß dieses kein Steuersignal mehr an die Elektromagnete 69 geben kann. Es ist dann keine Betätigung des Steuerventils 13 möglich. In Abhängigkeit von dem Signal, das er vom Tachogenerator 76 erhält, verändert der Microcontroller die Spannungsversorgung für das Vorsteuergerät 71 so daß von diesem mit zunehmender Fahrzeuggeschwindigkeit ein zunehmend kleiner werdendes maximales Steuersignal an einen Elektromagneten 69 gegeben werden kann. Je nach dem Aufbau des Vorsteuergeräts 71 kann die Abhängigkeit zwischen Fahrzeuggeschwindigkeit und Steuersignal ähnlich wie bei der Ausführung nach Figur 1 so sein, daß das Steuersignal bis zu einer bestimmten, von der Fahrzeuggeschwindigkeit abhängigen Auslenkung des Joysticks 72 von der Fahrzeuggeschwindigkeit unbeeinflußt bleibt und dann nicht mehr erhöht werden kann. Es ist jedoch auch möglich, daß sich ein Vorsteuersignal für einen Elektromagneten bis zur maximalen Auslenkung des Joysticks 55 noch ändert, daß das Vorsteuersignal einer bestimmten Auslenkung jedoch mit zunehmender Geschwindigkeit immer weiter herabgesetzt wird.

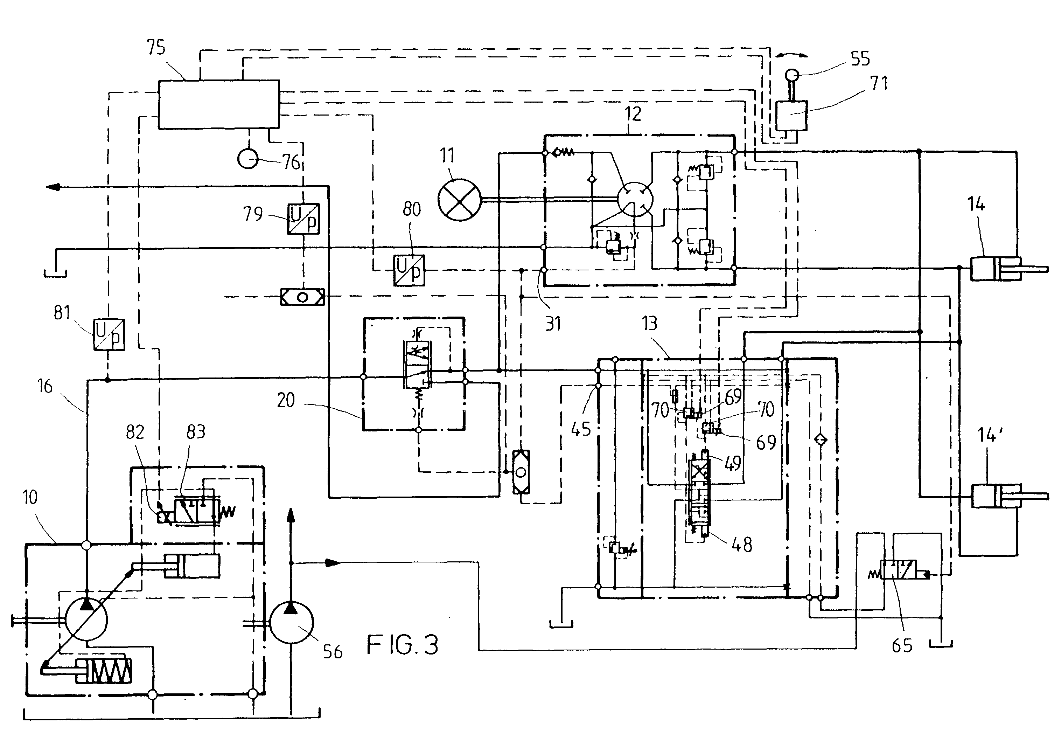

Die Ausführung nach Figur 3 entspricht hinsichtlich der Verstellpumpe 10 und der Steuerölpumpe 56, hinsichtlich des Prioritätsventils 20, der Lenkeinheit 12 mit Lenkrad 11, hinsichtlich des Steuerventils 13 mit elektromagnetisch betätigbaren Vorsteuerventilen 70, hinsichtlich des Abschaltventils 65 und hinsichtlich der Lenkmotore 14 und 14' voll der Ausführung nach Figur 2.

Ebenso wie bei der Ausführung nach Figur 2 ist ein Microcontroller 75 vorhanden, dem Signale von folgenden Geräten oder Sensoren zugeführt werden. Von einem Tachogenerator 76, mit dem die Geschwindigkeit des Fahrzeugs erfaßt wird. Von einem Drucksensor 79, der ein dem höchsten Lastdruck (Lastdruck am Lastmeldeanschluß 31 der Lenkeinheit 12 oder am Lastmeldeanschluß 45 des Steuerventils 13 oder höchster Lastdruck der Arbeitshydraulik) entsprechendes elektrisches Signal abgibt. Von einem Drucksensor 80, der einen Lastdruck am Lastmeldeanschluß 31 der Lenkeinheit 12 erfaßt. Von einem Drucksensor 81, der den Druck in der Druckleitung 16 erfaßt und ein diesem Druck entsprechendes Signal abgibt. Außerdem erhält der Microntroller 75 elektrische Signale von den beiden Ausgängen des elektrischen Vorsteuergeräts 71. Der Microcontroller 75 gibt Steuersignale ab an die beiden Elektromagnete 69 der Vorsteuerventile 70 sowie an einen Elektromagneten 82 eines proportional verstellbaren, auf die Verstellpumpe 10 aufgebauten 3/2-Wegeventils 83, das die beiden Regelventile 17 und 18 aus den Figuren 1 und 2 ersetzt Der Microcontroller 75 steuert das Ventil 83 so, daß zwischen den von den Drucksensoren 79 und 81 erfaßten Drücken eine bestimmte Differenz besteht. Dadurch ist eine Load-sensing-Regelung realisiert. Ab einem Grenzdruck in der Druckleitung 16 steuert der Microcontroller 75 das Ventil 83 so, daß sich der Druck in der Druckleitung 16 nicht weiter erhöht. Dadurch wird eine Druckbegrenzung realisiert.

Bei einer Betätigung des Vorsteuergeräts 71 über den Joystick 55 gibt der Microcontroller 75 nur dann ein Steuersignal an einen der Elektromagnete 69 ab, wenn durch den Drucksensor 80 kein Lastdruck am Lastmeldeanschluß 31 der Lenkeinheit 12 erfaßt wird. Während einer Drehung des Lenkrads 11 ist also keine Lenkung mithilfe des Vorsteuergeräts 71 und des Steuerventils 13 möglich.

Ein an einen Elektromagneten 69 abgegebenes Steuersignal des Microcontrollers 75 wird in Abhängigkeit von dem vom Tachogenerator 76 empfangenen Signal verändert. Je höher die Fahrzeuggeschwindigkeit ist, desto kleiner wird bei einer bestimmten Auslenkung des Joysticks 55 das vom Microcontroller 75 an den entsprechenden Elektromagneten 69 abgegebene Steuersignal. Dabei sind je nach Programmierung des Microcontrollers sehr unterschiedliche Abhängigkeiten zwischen den Steuersignalen und der Fahrzeuggeschwindigkeit möglich.

Das Abschaltventil 65 ist bei den Ausführungen nach den Figuren 2 und 3 für die grundsätzliche Funktionsweise des hydraulischen Systems nicht notwendig. Denn bei einer Drehung des Lenkrads 11 verbleiben die Druckminderventile 70 in einer Position oder kehren in eine Position zurück, in der die Steuerkammern 48 und 49 des Steuerventils 13 unter Umgehung des Ventils 65 mit Tank verbunden sind. Das Abschaltventil 65 bringt insofern nur eine zusätzliche Sicherheit für die Priorität der Lenkung über das Lenkrad 11 gegenüber einer Lenkung mit dem Joystick 55.

## Patentansprüche

1. Hydraulisches Lenksystem für ein Fahrzeug, insbesondere für eine mobile Arbeitsmaschine, mit einer von einem nach Art eines Lenkrads ausgebildeten, ersten Lenkorgan (11) aus einer Neutralstellung verstellbaren Lenkeinheit (12) mit einem ersten Fluidanschluß (29), der mit einem für einen Lenkeinschlag nach links von Druck beaufschlagten (linken) Druckraum (35, 36') eines Lenkmotors (14, 14') verbunden ist, und mit einem zweiten Fluidanschluß (30), der mit einem für einen Lenkeinschlag nach rechts mit Druck beaufschlagten (rechten) Druckraum (36, 35') des Lenkmotors (14, 14') verbunden ist, mit einem nach Art eines Joystick ausgebildeten, zweiten Lenkorgan (55), mit dem ein Vorsteuersignal erzeugbar ist, und mit einem einen axial bewegbaren Ventilschieber (50) aufweisenden und nur durch das Vorsteuersignal ansteuerbaren Steuerventil (13), das einen ersten Fluidanschluß (43), der mit einem linken Druckraum (35, 36') des Lenkmotors (14, 14') verbunden ist, und einen zweiten Fluidanschluß (44), der mit einem rechten Druckraum (36, 35') des Lenkmotors (14, 14') verbunden ist, besitzt,
**dadurch gekennzeichnet,**
**daß** das Steuerventil (13) nur dann ansteuerbar ist, wenn sich die Lenkeinheit (12) in Neutralstellung befindet.

2. Hydraulisches Lenksystem nach Anspruch 1, **dadurch gekennzeichnet, daß** die ersten Fluidanschlüsse (29, 43) der Lenkeinheit (12) und des Steuerventils (13) mit demselben linken Druckraum (35, 36') und die zweiten Fluidanschlüsse (30, 44) der Lenkeinheit 12) und des Steuerventils (13) mit demselben rechten Druckraum (36, 35') des Lenkmotors (14, 14') verbunden sind.

3. Hydraulisches Lenksystem nach Anspruch 1 oder 2, **dadurch gekennzeichnet, daß** das Vorsteuersignal über mit dem zweiten Lenkorgan (55) verstellbare Vorsteuermittel (59, 71) aus einem Versorgungssignal generierbar ist und daß das Versorgungssignal nur dann an den Vorsteuermitteln (59, 71) ansteht, wenn sich die Lenkeinheit (12) in Neutralstellung befindet.

4. Hydraulisches Lenksystem nach Anspruch 1, 2 oder 3, **dadurch gekennzeichnet, daß** das Steuerventil (13) durch Beaufschlagung einer ersten Steuerkammer (48) mit einem Steuerdruck in die eine Richtung und durch Beaufschlagung einer zweiten Steuerkammer (49) mit einem Steuerdruck in die andere Richtung aus einer Neutralstellung verstellbar ist und daß eine Steuerkammer (48, 49) nur dann mit einem Steuerdruck beaufschlagbar ist, wenn sich die Lenkeinheit (12) in Neutralstellung befindet.

5. Hydraulisches Lenksystem nach den Ansprüchen 3 und 4 **gekennzeichnet durch** ein insbesondere als verstellbares Druckventil ausgebildetes Vorsteuerventil (60, 70), das mit einer Steuerkammer (48,49) des Steuerventils (13) verbunden ist und in Abhängigkeit von dessen Stellung die Steuerkammer (48, 49) mit einem Steuerdruck beaufschlagbar ist, und **durch** ein in Abhängigkeit von einer Bewegung des ersten Lenkorgans (11) geschaltetes Abschaltventil (65), das in einer Schaltstellung eine Verbindung des Vorsteuerventils (60, 70) mit einer Steuerdruckversorgungsleitung (57) unterbricht.

6. Hydraulisches Lenksystem nach Anspruch 5, **dadurch gekennzeichnet, daß** das Abschaltventil (65) in der einen Schaltstellung seinen mit dem Vorsteuerventil (60, 70) verbundenen Ausgang zu einem Tank (15) hin entlastet.

7. Hydraulisches Lenksystem nach einem der Ansprüche 3 bis 6, **dadurch gekennzeichnet, daß** die Lenkeinheit (12) einen Druckmeldeanschluß (31) aufweist, an dem nur bei aus der Neutralstellung verstellter Lenkeinheit (12) ein Drucksignal, insbesondere der am ersten oder zweiten Fluidanschluß (29, 30) anstehende Lastdruck, ansteht und daß in Abhängigkeit von diesem Drucksignal mit dem zweiten Lenkorgan (55) ein Vorsteuersignal generierbar ist oder nicht.

8. Hydraulisches Lenksystem nach Anspruch 5 oder 6 und nach Anspruch 7, **dadurch gekennzeichnet, daß** das Abschaltventil (65) hydraulisch von dem am Druckmeldeanschluß (31) der Lenkeinheit (12) anstehenden Druck umschaltbar ist.

9. Hydraulisches Lenksystem nach einem vorhergehenden Anspruch, **dadurch gekennzeichnet, daß** die Vorsteuermittel (71) elektrisch abschaltbar sind.

10. Hydraulisches Lenksystem nach Anspruch 9, **dadurch gekennzeichnet, daß** die Lenkeinheit (12) einen Druckmeldeanschluß (31) aufweist, an dem nur bei aus der Neutralstellung verstellter Lenkeinheit (12) ein Druck, insbesondere der am ersten oder zweiten Fluidanschluß (29, 30) anstehende Lastdruck, ansteht, und daß die Vorsteuermittel (71) über einen elektrischen Druckschalter (80), der durch einen am Druckmeldeanschluß (31) der Lenkeinheit (12) anstehenden Druck betätigbar ist, abschaltbar sind.

11. Hydraulisches Lenksystem nach einem vorhergehenden Anspruch, **dadurch gekennzeichnet, daß** eine Bewegung des ersten Lenkorgans (11) durch einen elektrischen Signalgeber (77) erfaßbar ist und daß die Vorsteuermittel (71) über den elektrischen Signalgeber (77) abschaltbar sind.

12. Hydraulisches Lenksystem nach einem der Ansprüche 9 bis 11, **dadurch gekennzeichnet, daß** das Vorsteuerventil (70) von einem elektrischen Betätiger (69), insbesondere von einem Elektromagneten, verstellbar ist und daß der elektrische Betätiger (69) über das zweite Lenkorgan (55) nur ansteuerbar ist. wenn sich die Lenkeinheit (12) in ihrer Neutralstellung befindet bzw. das erste Lenkorgan (11) ruht.

13. Hydraulisches Lenksystem, nach einem vorhergehenden Anspruch, **dadurch gekennzeichnet, daß** die Abhängigkeit zwischen dem Vorsteuersignal und dem Betätigungsweg des zweiten Lenkorgans (55) in dem Sinne veränderbar ist, daß in einer bestimmten Lage des zweiten Lenkorgans (55) die Lenkgeschwindigkeit bei einer größeren Fahrzeuggeschwindigkeit kleiner ist als bei einer kleineren Fahrzeuggeschwindigkeit.

14. Hydraulisches Lenksystem nach Anspruch 13, **dadurch gekennzeichnet, daß** in Abhängigkeit von der Fahrzeuggeschwindigkeit lediglich die maximal mögliche Größe des Vorsteuersignals veränderbar ist.

15. Hydraulisches Lenksystem nach Anspruch 14, **dadurch gekennzeichnet, daß** in Abhängigkeit von der Fahrzeuggeschwindigkeit der in einer mit einem Vorsteuerventil (60) verbundenen Steuerdruckversorgungsleitung anstehende maximale Steuerdruck veränderbar ist.

16. Hydraulisches Lenksystem nach Anspruch 15, **dadurch gekennzeichnet, daß** an die Steuerdruckversorgungsleitung ein in Abhängigkeit von der Fahrzeuggeschwindigkeit verstellbares Ventil (67) angeschlossen ist, von dessen Stellung der in der Steuerdruckversorgungsleitung herrschende maximale Steuerdruck abhängt.

17. Hydraulisches Lenksystem nach Anspruch 16, **dadurch gekennzeichnet, daß** das Ventil (67) durch einen veränderbaren Steuerdruck verstellbar ist, mit dem eine Fahrhydraulik des Fahrzeugs steuerbar ist.

18. Hydraulisches Lenksystem, nach einem vorhergehenden Anspruch, **dadurch gekennzeichnet, daß** das zweite Lenkorgan (55) an einem um 180 Grad drehbaren Fahrersitz befestigt ist und daß durch eine Drehung des Fahrersitzes um 180 Grad die Verstellung des Steuerventils (13) in Abhängigkeit von der Betätigungsrichtung des zweiten Lenkorgans (55) umgekehrt wird.

## Claims

1. A hydraulic steering system for a vehicle, in particular for a mobile working machine, with a steering unit (12) that can be adjusted out of a neutral position by a first steering member (11), which is constructed in the manner of a steering wheel, that has a first fluid connection (29), which is connected to a (left-hand) pressure chamber (35, 36') of a steering motor (14, 14'), said pressure chamber being subjected to pressure for a steering movement to the left, and that has a second fluid connection (30), which is connected to a (right-hand) pressure chamber (36, 35') of the steering motor (14, 14'), said pressure chamber being subjected to pressure for a steering movement to the right, with a second steering member (55), which is constructed in the manner of a joystick and by means of which a pilot-control signal can be produced, and with a control valve (13) that has an axially movable valve spool (50) and can be activated only by the pilot-control signal and has a first fluid connection (43), which is connected to a left-hand pressure chamber (35, 36') of the steering motor (14, 14'), and a second fluid connection (44), which is connected to a right-hand pressure chamber (36, 35') of the steering motor (14, 14') **characterized in that** the control valve (13) can only be activated when the steering unit (12) is in the neutral position.

2. A hydraulic steering system according to Claim 1, **characterized in that** the first fluid connections (29, 43) of the steering unit (12) and the control valve (13) are connected to the same left-hand pressure chamber (35, 36') and the second fluid connections (30, 44) of the steering unit (12) and of the control valve (13) are connected to the same right-hand pressure chamber (36, 35') of the steering motor (14, 14').

3. A hydraulic steering system according to Claim 1 or 2, **characterized in that** the pilot-control signal can be generated from a supply signal by means of pilot-control means. (59, 71) that can be adjusted by means of the second steering member (55), and that the supply signal is only applied to the pilot-control means (59, 71) when the steering unit (12) is in the neutral position.

4. A hydraulic steering system according to Claim 1, 2 or 3, **characterized in that** the control valve (13) can be adjusted out of a neutral position in one direction by subjecting a first control chamber (48) to a control pressure and in the other direction by subjecting a second control chamber (49) to a control pressure, and that a control chamber (48, 49) can-be subjected to a control pressure only when the steering unit (12) is in the neutral position.

5. A hydraulic steering system according to Claims 3 and 4, **characterized by** a pilot-control valve (60, 70), which is, in particular, constructed as an adjustable pressure valve, is connected to a pressure chamber (48, 49) of the control valve (13) and as a function of the position of which the control chamber (48, 49) can be subjected to a control pressure, and by a cut-off valve (65), which is switched as a function of a movement of the first steering member (11) and, in one position, interrupts a connection between the pilot-control valve (60, 70) and a control-pressure supply line (57).

6. A hydraulic steering system according to Claim 5, **characterized in that** the cut-off valve (65) relieves its outlet connected to the pilot-control valve (60, 70) to a tank (15) in the one position.

7. A hydraulic steering system according to any of Claims 3 to 6, **characterized in that** the steering unit (12) has a pressure-signalling connection (31), to which a pressure signal, in particular the load pressure applied to the first or second fluid connection (29, 30), is applied only when the steering unit (12) has been adjusted out of the neutral position, and that it is possible for a pilot-control signal to be generated or not by means of the second steering member (55) as a function of this pressure signal.

8. A hydraulic steering system according to Claim 5 or 6 and according to Claim 7, **characterized in that** the cut-off valve (65) can be switched over hydraulically by the pressure applied to the pressure-signalling connection (31) of the steering unit (12).

9. A hydraulic steering system according to any preceding claim, **characterized in that** the pilot-control means (71) can be switched off electrically.

10. A hydraulic steering system according to Claim 9, **characterized in that** the steering unit (12) has a pressure-signalling connection (31), to which a pressure, in particular the load pressure applied to the first or second fluid connection (29, 30), is applied only when the steering unit (12) has been adjusted out of the neutral position, and **in that** the pilot-control means (71) can be switched off by means of an electric pressure switch (80), which can be actuated by a pressure applied to the pressure-signalling connection (31) of the steering unit (12).

11. A hydraulic steering system according to any preceding claim, **characterized in that** a movement of the first steering member (11) can be detected by an electric signal transmitter (77) and that the pilot-control means (71) can be switched off by means of the electric signal transmitter (77).

12. A hydraulic steering system according to any of claims 9 to 11, **characterized in that** the pilot-control valve (70) can be adjusted by an electric actuator (69), in particular an electromagnet, and that the electric actuator (69) can only be activated by means of the second steering member (55) when the steering unit (12) is in its neutral position and the-first steering member (11) is at rest.

13. A hydraulic steering system according to any preceding claim, **characterized in that** the dependence between the pilot-control signal and the actuating travel of the second steering member (55) can be varied in such a way that, in a particular position of the second steering member (55), the steering rate is lower at a higher vehicle speed than at a lower vehicle speed.

14. A hydraulic steering system according to Claim 13, **characterized in that** only the maximum possible magnitude of the pilot-control signal can be varied as a function of the vehicle speed.

15. A hydraulic steering system according to Claim 14, **characterized in that** the maximum control pressure prevailing in a control-pressure supply line connected to a pilot-control valve (60) can be varied as a function of the vehicle speed.

16. A hydraulic steering system according to Claim 15, **characterized in that** a valve (67) that can be adjusted as a function of the vehicle speed and on the position of which the maximum control pressure prevailing in the control-pressure supply line depends is connected to the control-pressure supply line.

17. A hydraulic steering system according to Claim 16, **characterized in that** the valve (67) can be adjusted by means of a variable control pressure, by means of which driving hydraulics of the vehicle can be controlled.

18. A hydraulic steering system according to any preceding claim, **characterized in that** the second steering member (55) is secured on a driver's seat that can be rotated through 180 degrees, and that the adjustment of the control valve (13) as a function of the actuating direction of the second steering member (55) is reversed by rotation of the driver's seat through 180 degrees.

## Revendications

1. Un système de direction hydraulique pour un véhicule, en particulier pour une machine productrice à travail mobile, doté d'une unité (12) de direction, qui peut être amenée à quitter une position neutre par un premier organe (11) de direction, lequel est conçu de façon à ressembler à un volant de direction, et qui est pourvue d'un premier raccord (29) de fluide, lequel est relié à une chambre (35, 36') de pression (gauche) d'un moteur (14, 14') de direction, sollicitée par une pression pour un braquage de direction vers la gauche, et d'un second raccord (30) de fluide, lequel est relié à une chambre (36, 35') de pression (droite) du moteur (14, 14') de direction, sollicitée par une pression pour un braquage de direction vers la droite, doté d'un second organe (55) de direction, conçu de façon à ressembler à un joystick, lequel permet de générer un signal de pilotage, et doté d'une valve (13) de command, qui présente un tiroir (50) de valve pouvant coulisser dans la direction axiale, qui ne peut être commandée qu'exclusivement par le signal de pilotage et qui est pourvue d'un premier raccord (43) de fluide, lequel est relié à une chambre (35, 36') de pression gauche du moteur (14, 14') de direction, et d'un second raccord (44) de fluide, lequel est relié à une chambre (36, 35') de pression droite du moteur (14, 14') de direction,
**caractérisé en ce que**
la valve (13) de command ne peut être commandée que lorsque l'unité (12) de direction se trouve en position neutre.

2. Un système de direction hydraulique conforme à la revendication n° 1, **caractérisé en ce que** les premiers raccords (29, 43) de fluide de l'unité (12) de direction et de la valve (13) de command sont reliés à la même chambre (35, 36') de pression gauche et les seconds raccords (30, 44) de fluide de l'unité (12) de direction et de la valve (13) de command sont reliés à la même chambre (36, 35') de pression droite du moteur (14, 14') de direction.

3. Un système de direction hydraulique conforme à la revendication n° 1 ou n° 2, **caractérisé en ce que** le signal de pilotage peut être généré à partir d'un signal d'alimentation à l'aide de moyens (59, 71) de pilotage pouvant être ajustés par le second organe (55) de direction et que le signal d'alimentation ne règne au niveau des moyens (59, 71) de pilotage qu'exclusivement, lorsque l'unité (12) de direction se trouve en position neutre.

4. Un système de direction hydraulique conforme à la revendication n° 1, n° 2 ou n° 3, **caractérisé en ce que** la valve (13) de command est réglable, à partir d'une position neutre, dans l'un des sens lorsqu'une pression de pilotage sollicite une première chambre (48) de commande et dans l'autre sens lorsqu'une pression de pilotage sollicite une seconde chambre (49) de commande et qu'une chambre (48, 49) de commande ne peut être soumise à une pression de pilotage qu'exclusivement, lorsque l'unité (12) de direction se trouve en position neutre.

5. Un système de direction hydraulique conforme aux revendications n° 3 et n° 4, **caractérisé par** une valve (60, 70) de pilotage, en particulier conçue sous forme de valve de pression réglable, qui est reliée à une chambre (48, 49) de commande de la valve (13) de command et dont la position détermine de quelle façon les chambres (48, 49) de commande sont sollicitées par une pression de pilotage, et par un conjoncteur-disjoncteur (65), qui est commuté en fonction d'un mouvement du premier organe (11) de direction et qui, dans une position de commutation, coupe une connexion entre la valve (60, 70) de pilotage et la conduite (57) d'alimentation en pression de pilotage.

6. Un système de direction hydraulique conforme à la revendication n° 5, **caractérisé en ce que** le conjoncteur-disjoncteur (65) dans l'une des positions de commutation décharge sa sortie, qui est reliée à la valve (60, 70) de pilotage, vers un réservoir (15).

7. Un système de direction hydraulique conforme à une des revendications n° 3 à n° 6, **caractérisé en ce que** l'unité (12) de direction présente un raccord (31) de signalisation de pression, au niveau duquel ne règne un signal de pression, en particulier la pression en charge régnant au niveau du premier ou du second raccord (29, 30) de fluide, qu'exclusivement lorsque l'unité (12) de direction est déplacée hors de la position neutre, et qu'un signal de pilotage peut être généré, ou non, par le second organe (55) de direction en fonction de ce signal de pression.

8. Un système de direction hydraulique conforme à la revendication n° 5 ou n° 6 et à la revendication n° 7, **caractérisé en ce que** le conjoncteur-disjoncteur (65) peut être commuté par voie hydraulique par la pression, qui règne au niveau du raccord (31) de signalisation de pression de l'unité (12) de direction.

9. Un système de direction hydraulique conforme à une revendication précédente, **caractérisé en ce que** les moyens (71) de pilotage peuvent être débranchés par voie hydraulique.

10. Un système de direction hydraulique conforme à la revendication n° 9, **caractérisé en ce que** l'unité (12) de direction présente un raccord (31) de signalisation de pression, au niveau duquel ne règne une pression, en particulier la pression en charge régnant au niveau du premier ou du second raccord (29, 30) de fluide, qu'exclusivement lorsque l'unité (12) de direction est déplacée hors de sa position neutre, et que les moyens (71) de pilotage peuvent être débranchés à l'aide d'un manocontact (80) électrique, qui peut être actionné par une pression régnant au niveau du raccord (31) de signalisation de pression de l'unité (12) de direction.

11. Un système de direction hydraulique conforme à une revendication précédente, **caractérisé en ce que** un mouvement du premier organe (11) de direction peut être saisi par un émetteur (77) de signal électrique et que les moyens (71) de pilotage peuvent être débranchés à l'aide de l'émetteur (77) de signal électrique.

12. Un système de direction hydraulique conforme à une des revendications n° 9 à n° 11, **caractérisé en ce que** la valve (70) de pilotage peut être actionnée par un actionneur (69) électrique, en particulier par un solénoïde, et que l'actionneur (69) électrique ne peut être commandé au travers du second organe (55) de direction qu'exclusivement, lorsque l'unité (12) de direction se trouve en position neutre ou lorsque le premier organe (11) de direction repose, selon le cas.

13. Un système de direction hydraulique conforme à une revendication précédente, **caractérisé en ce que** la relation entre le signal de pilotage et la course d'actionnement du second organe (55) de direction peut être modifiée, dans le sens que, pour une position donnée du second organe (55) de direction, la vitesse de direction est plus faible pour une vitesse du véhicule supérieure que pour une vitesse du véhicule inférieure.

14. Un système de direction hydraulique conforme à la revendication n° 13, **caractérisé en ce que** l'amplitude maximum possible pour le signal de pilotage peut être amenée à varier en fonction de la vitesse du véhicule.

15. Un système de direction hydraulique conforme à la revendication n° 14, **caractérisé en ce que** la pression de pilotage maximum, qui règne dans une conduite d'alimentation en pression de pilotage reliée à une valve (60) de pilotage, peut être amenée à varier en fonction de la vitesse du véhicule.

16. Un système de direction hydraulique conforme à la revendication n° 15, **caractérisé en ce que** une valve (67), qui peut être actionnée en fonction de la vitesse du véhicule, est reliée à la conduite d'alimentation en pression de pilotage, et sa position détermine la pression de pilotage maximum, qui règne dans la conduite d'alimentation en pression de pilotage.

17. Un système de direction hydraulique conforme à la revendication n° 16,
**caractérisé en ce que** la valve (67) peut être actionnée par une pression de pilotage variable, qui permet de piloter une hydraulique de conduite du véhicule.

18. Un système de direction hydraulique conforme à une revendication précédente, **caractérisé en ce que** le second organe (55) de direction est fixé au niveau d'un siège de conducteur, qui peut effectuer une rotation de 180 degrés, et qu'une rotation de 180 degrés du siège du conducteur inverse l'actionnement de la valve (13) de command, en fonction du sens d'actionnement du second organe (55) de direction.
